# EUROPEAN PATENT APPLICATION

(11) **EP 4 425 406 A1**
(43) Date of publication of application: **04.09.2024**
(21) Application number: 24160732.4
(22) Date of filing: 29.02.2024
(51) Int. Cl.: G06Q 20/20, G06Q 20/32, G06Q 20/38, G06Q 20/42

(54) **EFFICIENTLY SECURING DIGITAL PAYMENTS BY POINTS OF SALE WITHOUT NETWORK CONNECTIVITY**

(30) Priority: 02.03.2023 LU 103081
(71) Applicant: Taler Systems S.A., 5421 Erpeldange Luxembourg (LU); Kügel, Stefan, 5421 Erpeldange Luxembourg (LU)
(72) Inventor: Marchano, Sebastian Javier, 1176 Buenos Aires C1176 ABN (AR)

(57) **Abstract**

System and method to prove evidence of payment confirmation at a point of sale (POS) where both seller and customer obtain one-time passwords by making use of two differentiated password generation processes and devices on each party's side, of which a costumer's mobile device with network connectivity and a payment application running on this device and a seller's device without the need of having network connectivity, and an electronic payment system with network connectivity which knows the seller or the seller's point of sale by a previously addressed unique identifier and a shared secret previously set by the seller and the payment system.

## Description

The claimed invention relates to a system using one-time passwords, time-based one-time passwords or other variants of one-time passwords (e.g. counter-based or amount-based one-time passwords) to enable sellers at a point of sale which are not disposing of a network connectivity to efficiently and securely check payment confirmations generated through an electronic payment system by making use of a customer's mobile device disposing of an active network connectivity (e.g. a smartphone, smartwatch, tablet PC or the like).

To propose the requested solution for this scenario, our invention uses a payment application (PA) on the customer's mobile device (CD) and through its network connectivity also the electronic payment system (PS) to which the seller's point of sale is subscribed, and furthermore a device under control of the seller (SD) to generate one-time passwords, time-based one-time passwords or other variants of one-time passwords (e.g. counter-based, amount-based).

The system and process of the claimed invention can be described as follows:
The customer is expected to enter into the payment application (PA) running on the customer's mobile device (CD) a unique identifier (ID) given for each point of sale which was previously addressed to the seller or the seller's point of sale by the payment system (PS), for example, a seller ID or a POS number, the seller's or point of sale's payment details, or a QR code, barcode or the like. The customer enters this ID through manual input or by scanning a QR code, barcode or other type of code, by receiving an NFC signal or using another appropriate method. Additionally, the customer can for the OTP generation by the payment system (PS) possibly be prompted to enter the total amount (AMT) to be paid.

Then, the customer has to submit the payment order via the payment application (PA) on the mobile device (CD) together with the seller's or the point of sale's unique identifier (ID), requesting the payment system (PS) to reply with the payment confirmation. The payment application (PA) makes use of the network connectivity of the mobile device (CD) and transmits this data to the payment system (PS).

Having received the seller's or the point of sale's unique identifier (ID), the payment system (PS) can now query from its database (DB) a shared secret (S) that has been previously set by the seller and the payment system. Then, the payment system (PS) generates at least one one-time password (OTP) using (1.) the seller's or the point of sale's unique identifier (ID) which enables the payment system (PS) to retrieve (2.) the shared secret (S) from its database (DB) and - according to the specific OTP variant used for the respective unique identifier (ID) - also using additional data such as (3.) a counter (CNT) associated with the unique identifier (ID) or (4.) the current time (Tx) for each time-based one-time password, and if applicable (5.) the total amount (AMT) to be paid by the customer, or a combination of these data.

The payment system (PS) transmits the payment confirmation and one or more one-time passwords (OTP), e.g. an amount-based or counter-based OTP, time-based one-time passwords or other variants of one-time passwords, to the payment application (PA) running on the customer's device (CD) with network connectivity.

At the point of sale, the device under control of the seller (SD) is activated by the seller to generate a one-time password (POS OTP) using the shared secret (S) and the same inputs like the payment system (PS) uses to generate its set of one-time passwords (OTP). Apart from (1.) the shared secret (S) the point of sale knows its (2.) unique identifier (ID) and can use additional inputs specific to the chosen variant to generate the POS OTP such as (3.) a counter (CNT) or (4.) the current time (Tx) and - if applicable - (5.) the total amount (AMT) to be paid by the customer. Thus, the potentially offline seller's device (SD) can do the same calculation as the online payment system (PS) and derive the same one-time password value.

The customer is then expected to show to the seller the OTP, a time-based one-time password or a multitude of time-based one-time passwords displayed in the payment application (PA), so that the seller can compare these with the one-time password (POS OTP) displayed on the seller's device (SD). If one of the one-time passwords (OTP) generated by the payment system (PS) and forwarded via the customer's device (CD) matches with the one-time password of the seller (POS OTP), evidence is proved that the customer made the payment in a proper way.

What is essential to the idea of our invention is that the one-time password generation and its security depend on a shared secret (S) which is never made available to any customer. Here, the designated verifier is the point of sale and the prover is the payment system. The OTP code is equivalent to an ultra-compact designated verifier signature over a fixed message affirming that a payment was made. This approach does not authenticate the customer as the shared secret (S) is previously set between the seller or the seller's point of sale and the payment system (PS) and is not known or specific to customers. To make a digital payment customers may or may not be authenticated. Customers will never know or possess the shared secret and are minimally required to enter a seller's unique identifier (ID) into the payment application (PA) on the customer's device (CD) to let the payment system (PS) retrieve the shared secret (S). Inputs like e.g. time, counters, amounts or a combination of these allow for different variants to generate one-time passwords which all cannot identify the customer who may remain unidentified.

The figures in this application show different variants of one-time passwords stating:

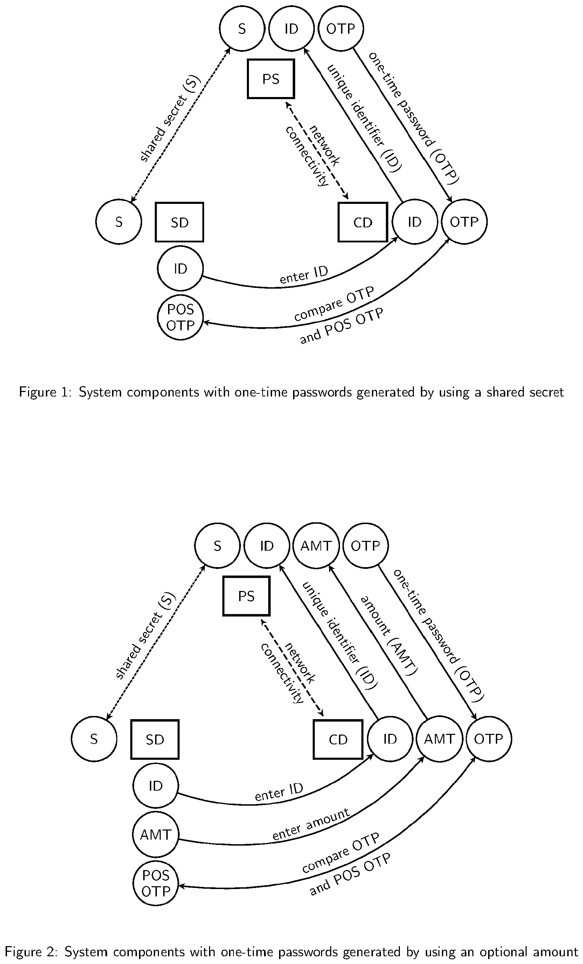

in figure 1 that "a payment was made to the seller" where only the seller's or the point of sale's unique identifier (ID) is entered into the customer's device (CD),
in figure 2 that "a payment was made to the seller over amount (AMT)" where (AMT) is an optional amount entered into the customer's device (CD),

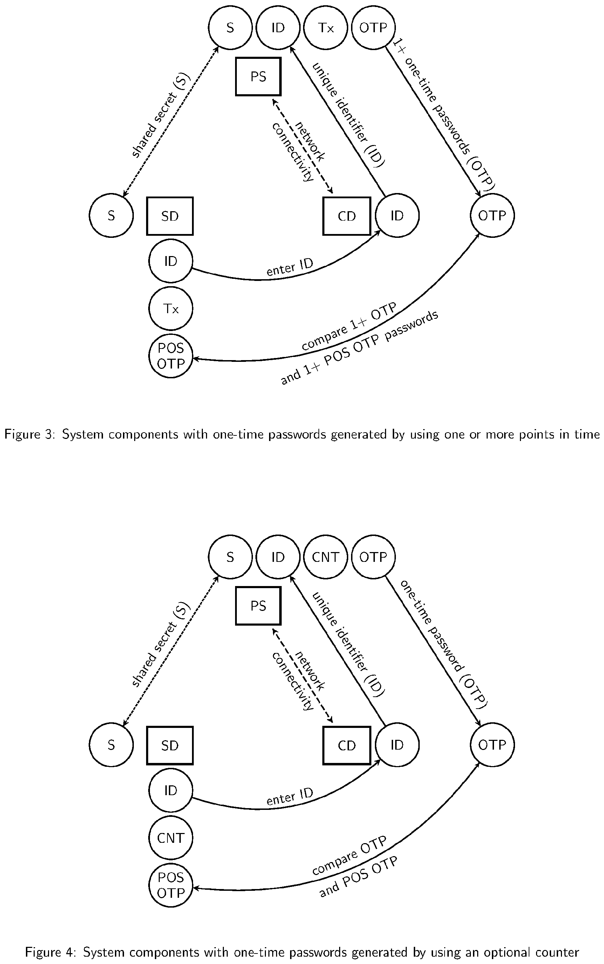

in figure 3 that "a payment was made to the seller at a time (Tx)" where (Tx) is the current time,
in figure 4 that "a (CNT)-th payment was made to the seller" where (CNT) is a counter known at the payment system (PS) for the seller or point of sale,

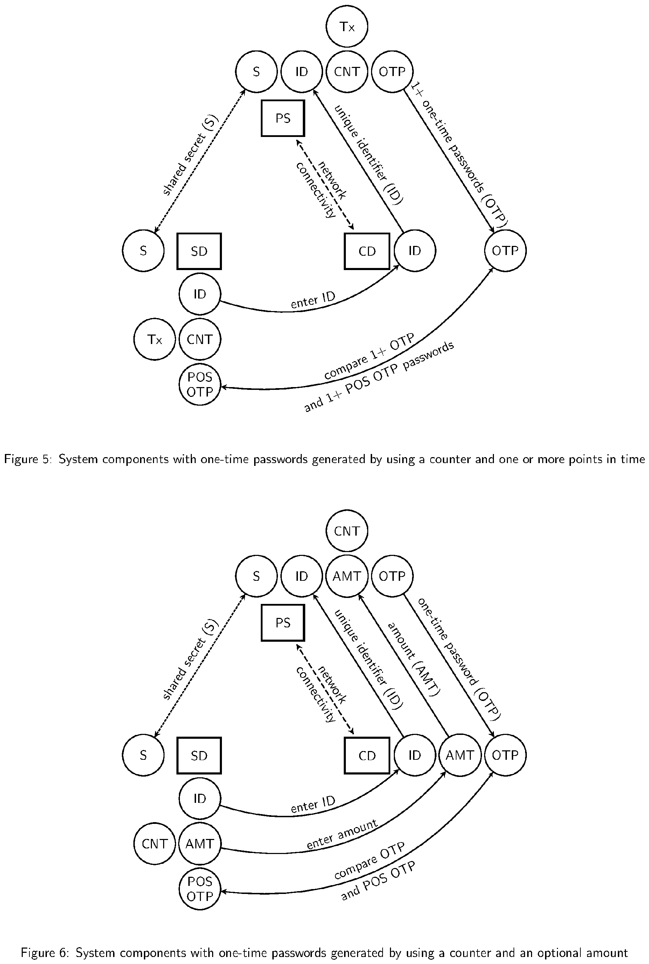

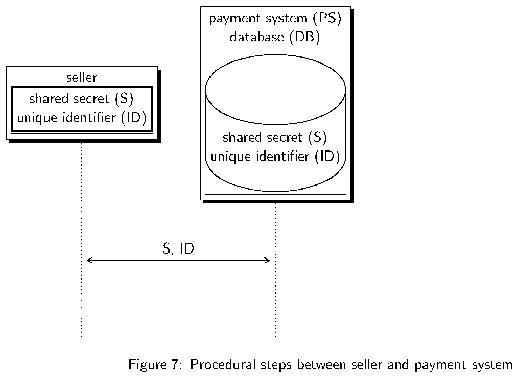

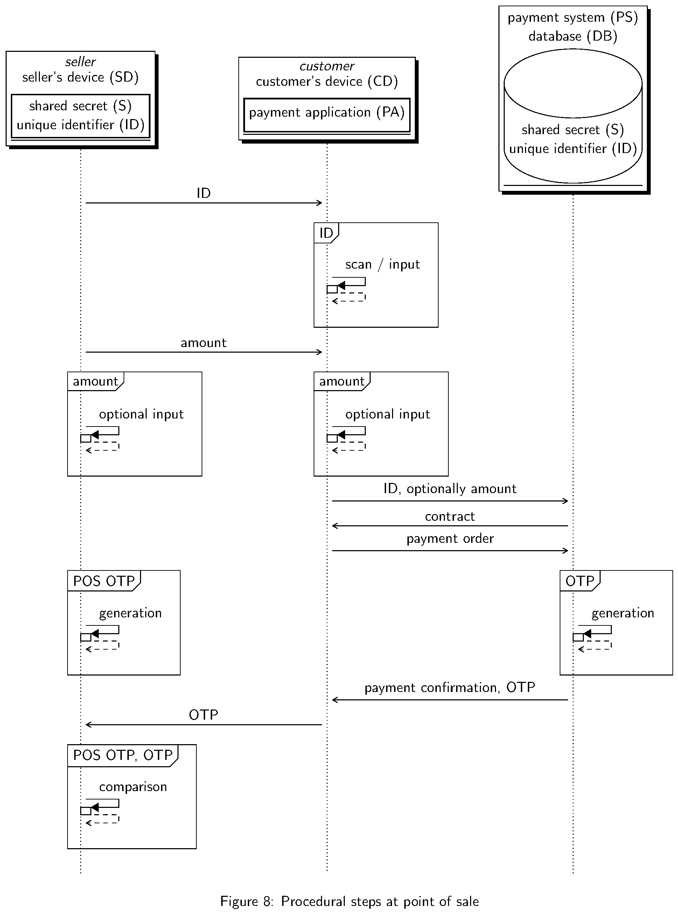

in figure 5 that "a payment was made to the seller over amount (AMT) at a time (Tx)" where (AMT) is the amount entered into the customer's device (CD) and (Tx) is the current time,
and in figure 6 that "a (CNT)-th payment was made to the seller over amount (AMT)" where (CNT) is a counter known at the payment system (PS) for the seller or point of sale and (AMT) is an amount entered into the customer's device (CD).

Our invention does not only solve the well-known disadvantage that at a point of sale the required network connectivity is temporarily or permanently unavailable although the confirmation of electronic payments is indispensable. Our solution also caters for securing the payment transaction in a potential case where the customer's device may have been manipulated. For example, the customer's device may be running a payment application that looks like the expected payment application and shows a payment confirmation, but does not actually trigger a payment to the seller. The seller may then falsely suppose that the payment has been processed and delivers goods or services without remuneration.

In contrast to our invention, choosing a procedure making use of digital signatures - where the payment service would generate a digital signature which confirms the successful transaction with all of the necessary details - would require the seller to have a much more sophisticated device to process, validate and confirm the digital signatures. Also, this procedure would expect to receive the digital signature from the customer (say by scanning a QR code or an NFC message) at the point of sale. Both of these operations need non-trivial hardware (camera, NFC reader) and computing power (QR code recognition, public key cryptography).

In contrast to this, our invention makes use of a quick generation and comparison of one-time passwords (or variants of one-time passwords generated with times, amount or other data) displayed on two different devices of which only the customer's device needs network connectivity. This simplifies and accelerates the interaction between seller and customer and significantly reduces hardware requirements for the point of sale while providing an adequate level of security.

Regarding the hardware requirements on the seller's side, a point of sale minimally needs a unique identifier (ID) and a simple device capable to generate one-time passwords (POS OTP) using the unique identifier (ID) and the previously shared secret (S) between seller and payment system.

To meet the minimal requirements, an application suffices running on a general purpose computer, a POS device, a smartphone, a cash register or on another appropriate device like a dedicated hardware device with at least one activation button, display, memory and logic for generating one-time passwords.

Given the case that the seller's device disposes of an input means to obtain data like, for example, amounts, counters, time or timestamps, the device may generate one-time passwords using additionally an amount, a counter or generate time-based one-time passwords using additionally time or timestamps or a combination of amounts, counters and times.

The input means of the seller's device can also be a scanner to scan data like, for example, unique identifier (ID), shared secret, amounts, time or timestamps or other data at the point of sale or QR codes, barcodes or other types of code including but not limited to the formerly mentioned data, possibly displayed at a cash register.

## Claims

1. A system and a method to prove evidence of payment confirmation at a point of sale (POS) where both seller and customer obtain one-time passwords by making use of two differentiated password generation processes and devices on each party's side, of which a costumer's mobile device (CD) with network connectivity and a payment application (PA) running on this device and a seller's device (SD) without the need of having network connectivity, and an electronic payment system (PS) with network connectivity which knows the seller's point of sale by a previously addressed unique identifier (ID) and which also knows a shared secret (S) previously set by the seller and the payment system,
and where the seller's or point of sale's one-time password (POS OTP) which is generated by the seller's device (SD) using the point of sale's unique identifier (ID) and the shared secret (S) is required to match with at least one of the customer's one-time passwords (OTP) generated by the electronic payment system (PS) using the above mentioned unique identifier (ID) and the shared secret (S) which the payment system (PS) retrieves from its database (DB) upon reception of the unique identifier (ID) that the customer entered into the payment application (PA) running on the customer's mobile device (CD) when submitting the payment order via the payment application to be effectuated by the payment system (PS).

2. System and method of claim 1, wherein the seller's or point of sale's unique identifier (ID) is a seller ID or a POS number, the seller's or point of sale's payment details or other type of unique identifier.

3. System and method of claim 1, wherein both differentiated password generation processes are using time-based one-time passwords generated with times (Tx) or timestamps.

4. System and method of claim 1, wherein both differentiated password generation processes are using time-based one-time passwords generated with a combination of times and other data, for example an amount or a counter.

5. System and method of claim 1, wherein both differentiated password generation processes are using one-time passwords generated with an amount or a counter or other data entered on the seller's device (SD) and the customer's mobile device (CD).

6. System and method of claim 1, wherein the seller's device (SD) is capable to generate one-time passwords (POS OTP) using the unique identifier (ID) and the shared secret (S) through an application running on a general purpose computer, a POS device, a smartphone, a cash register or on another appropriate device like a dedicated hardware device with at least one activation button, display, memory and logic.

7. System and method of claim 1, wherein the seller's device (SD) disposes of an input means to obtain data like, for example, amounts, time or timestamps, thus being capable to generate one-time passwords using additionally an amount or to generate time-based one-time passwords using additionally time or timestamps or a combination of amounts and times or other variants of one-time passwords using other additional data.

8. System and method of claim 1, wherein the input means of the seller's device (SD) is a scanner to scan data like, for example, unique identifier (ID), shared secret (S), amounts, counters, time or timestamps or other data at the point of sale (POS) or QR codes, barcodes or other types of code including but not limited to the formerly mentioned data, possibly displayed at a cash register.

9. System and method of claim 1, wherein the seller's device (SD) has a numeric display and supports the computation of a simple cryptographic hash function to generate one-time passwords.

10. System and method of claim 1, wherein the data are entered on the customer's mobile device (CD) through manual input or by scanning a QR code, barcode or other type of code, by receiving an NFC signal or using another appropriate method.
